# FASCICULE DE BREVET EUROPEEN

(11) **EP 1 849 647 B1**
(45) Date de publication et mention de la délivrance du brevet: **15.02.2012**
(21) Numéro de dépôt: 07290497.2
(22) Date de dépôt: 23.04.2007
(51) Int. Cl.: B60N 2/08

(54) **Procédé de commande d'un siège**
Verfahren zum Steuern eines Sitzes
Seat adjustment method

(30) Priorité: 27.04.2006 FR 0603795
(43) Date de publication de la demande: 31.10.2007
(73) Titulaire: Precilec, 89000 Auxerre (FR)
(72) Inventeur: Thoreux, Loic, 92400 Courbevoie (FR); Nivet, Laurent, 92600 Asnieres (FR)
(74) Mandataire: Blot, Philippe Robert Emile

(56) Documents cités:
- DE-C1- 4 337 293
- US-A- 5 164 645
- US-A- 5 765 916
- US-B2- 6 583 596
- US-B2- 6 943 516

## Description

La présente invention concerne un procédé de commande d'un siège équipé :
- d'au moins un actionneur commandable de déplacement de deux parties du siège l'un par rapport à l'autre ;
- d'un verrou commandable de blocage mécanique positif du mouvement des deux parties du siège, le verrou étant déplaçable entre une position engagée en regard d'une butée complémentaire et une position dégagée à l'écart de la butée.

L'invention concerne en outre un siège propre à la mise en oeuvre de ce procédé.

Les sièges de passagers disposés dans les avions sont couramment équipés d'actionneurs électriques permettant le déplacement de différents éléments mobiles du siège les uns par rapport aux autres.

Des sièges sont notamment décrits dans les documents US 6 943 516, US 5 164 645, US 5 765 916, US 6 583 596 et DE 43 37 293.

Pour assurer la sécurité des passagers lors des phases critiques de décollage ou d'atterrissage, il est impératif que le siège puisse présenter une rigidité suffisante, évitant qu'en cas de choc violent, le siège ne se déforme ou se décroche du reste de l'appareil. La seule présence des actionneurs reliant les différents éléments du siège n'est pas toujours suffisante pour satisfaire ces contraintes de résistance en cas de choc.

Aussi, il est connu d'immobiliser certaines parties du siège les unes par rapport aux autres à l'aide de verrous lors des phases critiques du vol de l'appareil. Ces verrous sont constitués par exemple par le noyau mobile d'un électroaimant dont le bobinage est porté par une partie mobile du siège et dont le noyau mobile est déplaçable entre une position rétractée et une position sortie pour laquelle il est engagé dans la partie fixe du siège, assurant ainsi un blocage mécanique positif du mouvement des deux parties de siège l'une par rapport à l'autre.

Dans de tels agencements, le noyau mobile de l'électroaimant formant le verrou est reçu dans une gâche de taille réduite ménagée dans la partie complémentaire du siège.

Pour son pilotage, le siège est équipé de moyens de pilotage de l'électroaimant, de sorte que, avant la mise en action de l'actionneur assurant le déplacement des deux parties l'une par rapport à l'autre, le verrou soit rétracté et, à l'inverse, de sorte que la sortie du verrou soit commandée lorsque l'actionneur atteint une position prédéterminée dans laquelle le verrou est dans la gâche afin d'assurer la mise en oeuvre du verrou.

Dans la pratique, on constate que, compte tenu des tolérances de fabrication du siège et des actionneurs, et des éventuelles actions involontaires du passager sur le siège, le déplacement du verrou vers sa position rétractée et/ou vers sa position sortie est rendu difficile voire impossible, du fait du désalignement entre le verrou et la gâche.

Dans le cas de blocage, la force de déplacement de l'électroaimant, relativement réduite, est souvent insuffisante pour dégager ou mettre en place le verrou.

L'invention a pour but de proposer une solution à ce problème de déplacement du verrou.

A cet effet, l'invention a pour objet un procédé de commande d'un siège selon la revendication 1.

Suivant des modes particuliers de mise en oeuvre, le procédé comporte l'une ou plusieurs des caractéristiques des revendications 2 à 4.

L'invention a également pour objet un siège de véhicule selon la revendication 5.

L'invention sera mieux comprise à la lecture de la description qui va suivre, donnée uniquement à titre d'exemple et faite en se référant aux dessins, sur lesquels :
- La figure 1 est une vue schématique en perspective d'un siège de véhicule selon l'invention ;
- la figure 2 est une vue schématique de l'agencement du verrou et de la gâche ; et
- les figures 3 et 4 sont des algorithmes illustrant des phases de fonctionnement du siège utilisant un procédé selon l'invention.

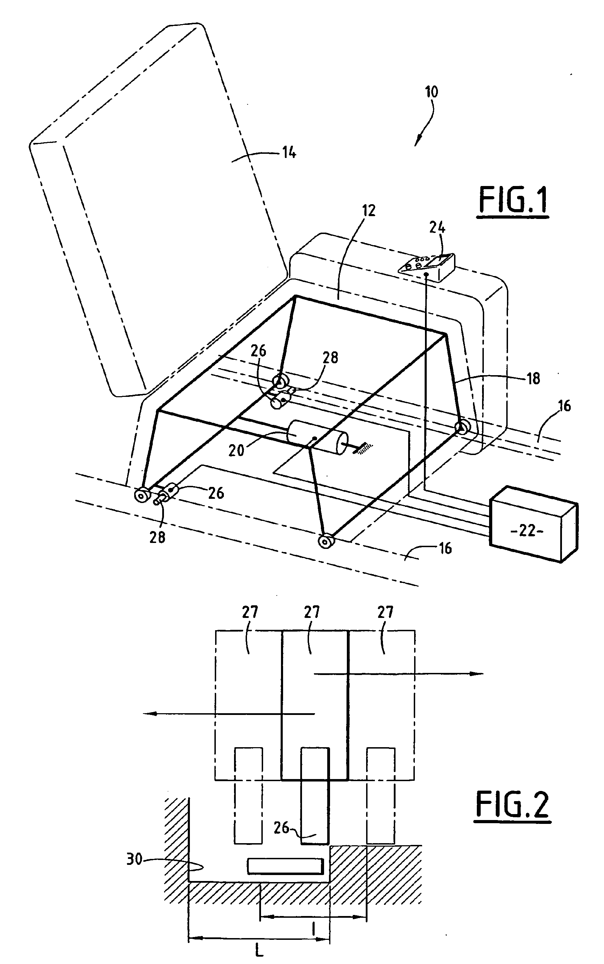

Le siège 10 représenté sur la figure 1 comporte une assise 12, un dossier 14 ainsi que deux rails 16 fixés au sol et le long duquel l'assise 12 et le dossier 14 sont montés coulissant par l'intermédiaire d'un piètement 18. Les rails 16 forment des moyens de guidage du piètement 18 du siège.

Un actionneur 20 est disposé entre le piètement 18 et le sol pour assurer le déplacement du piètement 18 suivant la longueur des rails 16. L'actionneur 20 est relié à une unité centrale de pilotage 22, elle-même reliée à un clavier 24 permettant au passager assis sur le siège de déplacer celui-ci par commande de l'actionneur 20.

Comme connu en soi, l'actionneur 20 est équipé d'un moyen de mesure de sa position et donc de la position du siège suivant la longueur des rails 16. Ce moyen de mesure est formé par exemple d'un potentiomètre. Il est relié à l'unité de pilotage 22 pour connaître en continu la position courante du siège.

En outre, deux verrous 26 sont montés sur le piètement 18. Ils sont constitués chacun du noyau d'un électro-aimant 27 dont le bobinage 28 est solidaire du piètement. Le noyau 26 est mobile transversalement au sens d'avancement du piètement entre une position rétractée dans laquelle il est à l'écart du rail 16 associé et une position sortie dans laquelle il est engagé dans une gâche 30 formant butée ménagée dans le rail 16 assurant ainsi un blocage mécanique positif du mouvement du piètement 18 par rapport aux rails 16.

La gâche 30 et le verrou 26 sont représentés schématiquement à plus grande échelle sur la figure 2. Ainsi, la gâche 30 présente une étendue L suivant la direction de déplacement du piètement supérieure à la dimension correspondante du verrou 26.

Ainsi, le verrou 26 dans sa position sortie peut être engagé dans la gâche 30 pour plusieurs positions du piètement sur une plage réduite de déplacement de celui-ci dans laquelle le verrou est en face de la gâche 30. Une première position de l'électroaimant 27 est représentée en traits pleins sur la figure 2 alors qu'une autre position 27A est représentée en traits mixtes pour illustrer cette situation.

Les électroaimants 27 sont chacun reliés à l'unité de pilotage 22 pour commander la sortie des noyaux 26 lorsque le siège est dans une position de sécurité dans laquelle les verrous doivent être engagés dans la gâche et pour rétracter les noyaux 26 lorsque l'utilisation commande le déplacement du siège de cette position de sécurité vers une autre position, notamment en pilotant l'actionneur 20.

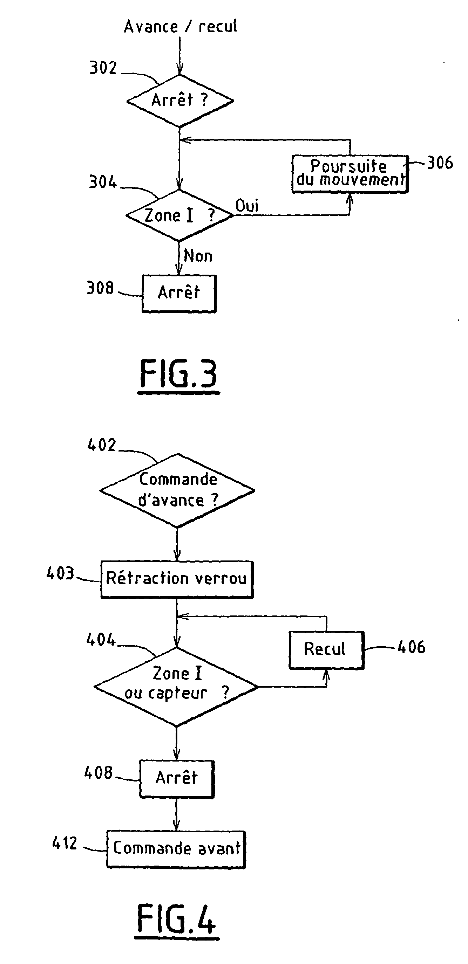

A cet effet, l'unité centrale de pilotage 22 met en oeuvre les algorithmes illustrés sur les figures 3 et 4. Pour la mise en oeuvre de ces algorithmes, une zone l chevauchant partiellement une extrémité avant de la gâche 30 est définie dans l'unité de pilotage 22 afin de commander le siège d'une manière particulière lorsque le verrou 26 est dans cette zone au moins pour amener le verrou vers sa position dégagée. La position fournie par le moyen de mesure prévu dans l'actionneur est comparée en permanence à la zone I.

Lors d'une phase de déplacement du piètement 18 par mise en mouvement de l'actionneur 20, qu'il s'agisse d'une phase d'avance ou de recul, le verrou 26 est rétracté. Lors de cette phase de fonctionnement, et comme illustré sur la figure 3, il est détecté, à l'étape 302, si une commande d'arrêt est adressée par l'utilisateur. Une telle commande peut consister par exemple à ce que l'utilisateur cesse d'enfoncer le bouton de commande permettant le déplacement du piètement 18.

Lorsqu'une telle commande d'arrêt est détectée, l'actionneur 20 n'est pas immédiatement arrêté et l'étape 304 est mise en oeuvre. Au cours de cette étape, la position de l'actionneur 20 et donc du piètement 18 est déterminée pour savoir si le verrou 26 est ou non dans la zone I.

Si tel est le cas, le déplacement du piètement 18 est poursuivi, à l'étape 306, l'actionneur 20 étant toujours commandé par l'unité 22, malgré la commande d'arrêt de l'utilisateur.

Lorsque le verrou est sorti de la zone I, l'arrêt de l'actionneur 20 est commandé à l'étape 308.

Ainsi, par mise en oeuvre de l'algorithme de la figure 3, le verrou 26 ne peut s'arrêter en regard de la zone I de la gâche. Ainsi, si le verrou doit être sorti, par exemple parce que le siège est dans sa position de sécurité, le verrou est engagé dans la gâche en étant certain que celui-ci se trouve en dehors de la zone I. Ainsi, le verrou 26 est suffisamment écarté des bords de la gâche de sorte que celui-ci peut être facilement engagé dans la gâche sans risque de heurter les bords de celle-ci.

Dans cette position, la sortie du verrou est commandée automatiquement par l'unité 22 comme connu en soi.

Si, avant la commande d'arrêt, le siège se déplace dans un sens d'avance, alors que le verrou franchit la zone l, l'avance du siège est poursuivie jusqu'à ce que le verrou soit en dehors de la zone l, de sorte qu'il ne se trouve alors plus en regard de la gâche, comme illustré par l'électroaimant 27B en pointillés sur la figure 2. Ainsi, et malgré les tolérances de fabrication, l'unité centrale de pilotage 22 détecte que le piètement n'est pas en position de sécurité et ne provoque pas la commande de sortie des verrous 26.

Sur la figure 4 est représenté l'algorithme mis en oeuvre lorsque le siège quitte sa position de sécurité, les verrous 26 étant initialement sortis dans les gâches.

Dès qu'une commande d'avance est détectée à l'étape 402, l'électroaimant est directement commandé à l'étage 403 ; il est vérifié, à l'étape 404, si le verrou 26 est ou non dans la zone l. Si tel est le cas, l'actionneur 20 est commandé, à l'étape 406, en sens inverse de manière à provoquer le recul du piètement. La commande de recul est maintenue jusqu'à ce que le verrou sorte de la zone l et se trouve dans la position 26A illustrée en traits mixtes sur la figure 2. L'arrêt de l'actionneur 20 est alors commandé à l'étape 408. A l'étape 410, les verrous 26 sont rétractés et seulement après rétraction des verrous, l'actionneur 20 est commandé en avant, conformément à la demande de l'utilisateur.

Ainsi, avec de tels procédés, le verrou est sorti ou rétracté de la gâche alors que celui-ci se trouve à l'écart des extrémités de la gâche. Il peut ainsi être déplacé malgré la faible puissance de l'électroaimant agissant sur le noyau mobile. De plus, un capteur peut permettre de contrôler la rétraction du verrou. Si ce capteur confirme la rétraction du verrou, l'étage 406 est non avenue ou s'arrête.

En variante, la gâche 30 formée d'un trou dans lequel vient se loger le verrou 26 est remplacée par une tige formant butée pour un verrou en forme de crochet, le crochet étant déplaçable entre une position dans laquelle le crochet est engagé autour de la tige et une position dégagée de la tige.

## Revendications

1. Procédé de commande d'un siège équipé :
- d'au moins un actionneur (20) commandable de déplacement de deux parties (16, 18) du siège l'un par rapport à l'autre ;
- d'un verrou (26) commandable de blocage mécanique positif du mouvement des deux parties du siège, le verrou (26) étant déplaçable entre une position engagée en regard d'une butée complémentaire (30) et une position dégagée à l'écart de la butée (30),
**caractérisé en ce qu'**il comporte, en cas d'ordre de modification de commande de l'actionneur (20), les étapes de :
- vérifier si les deux parties (16, 18) sont dans une plage critique (I) de positionnement relatif,
- tant que les deux parties (16, 18) sont dans la plage critique (I), appliquer à l'actionneur (20) une commande différente de la commande modifiée, et
- amener le verrou (26) vers sa position engagée ou sa position dégagée lorsque les deux parties (16, 18) sont sorties de la place critique (I).

2. Procédé de commande selon la revendication 1, **caractérisé en ce que** la commande modifiée est un ordre d'interruption du mouvement de l'actionneur (20) et la commande différente appliquée est la poursuite du mouvement.

3. Procédé de commande selon la revendication 1, **caractérisé en ce que** la commande modifiée est la mise en mouvement de l'actionneur (20) dans un sens, avec le verrou (26) initialement verrouillé, et la commande différente appliquée est le déplacement en sens inverse de l'actionneur (20).

4. Procédé de commande selon l'une quelconque des revendications précédentes, **caractérisé en ce que** la plage critique (I) s'étend à cheval sur une extrémité de la butée (30).

5. Siège comprenant :
- au moins deux parties mobiles (16, 18) l'une par rapport à l'autre,
- au moins un actionneur (20) commandable de déplacement des deux parties (16, 18) du siège l'un par rapport à l'autre ;
- un verrou (26) commandable de blocage mécanique positif du mouvement des deux parties du siège, le verrou (26) étant déplaçable entre une position engagée en regard d'une butée complémentaire (30) et une position dégagée à l'écart de la butée (30),
- un dispositif de commande (22, 24),
**caractérisé en ce que**, en cas d'ordre de modification de commande de l'actionneur (20), le dispositif de commande comporte des moyens pour :
- vérifier si les deux parties (16, 18) sont dans une plage critique (I) de positionnement relatif,
- tant que les deux parties (16, 18) sont dans la plage critique (I), appliquer à l'actionneur (20) une commande différente de la commande modifiée, et
- amener le verrou (26) vers sa position engagée ou sa position dégagée lorsque les deux parties (16, 18) de la plage critique (I).

## Claims

1. Method of controlling a seat provided with:
- at least one controllable actuator (20) for displacement of two parts (16, 18) of the seat relative to one another;
- a controllable bolt (26) for positive mechanical blocking of the movement of the two parts of the seat, the bolt (26) being displaceable between an engaged position facing a complementary abutment (30) and a disengaged position remote from the abutment (30),
**characterised in that** it has, for the case of an instruction modifying the command to the actuator (20), the steps:
- checking whether the two parts (16, 18) are in a critical range (I) of relative positioning,
- insofar as the two parts (16, 18) are in the critical range (I), applying to the actuator (20) a command that is different to the modified command, and
- bringing the bolt (26) into its engaged position or disengaged position when the two parts (16, 18) have left the critical range (I).

2. Control method according to claim 1, **characterised in that** the modified command is an instruction for interruption of the movement of the actuator (20), and the different command applied is continuation of the movement.

3. Control method according to claim 1, **characterised in that** the modified command is the bringing-about of movement of the actuator (20) in one direction, with the bolt (26) initially closed, and the different command applied is displacement of the actuator (20) in the opposite direction.

4. Control method according to any one of the preceding claims, **characterised in that** the critical range (I) extends to either side of an extremity of the abutment (30).

5. Seat comprising:
- at least two parts (16, 18) movable relative to one another,
- at least one controllable actuator (20) for displacement of the two parts (16, 18) of the seat relative to one another;
- a controllable bolt (26) for positive mechanical blocking of the movement of the two parts of the seat, the bolt (26) being displaceable between an engaged position facing a complementary abutment (30) and a disengaged position remote from the abutment (30),
- a control device (22, 24),
**characterised in that**, for the case of an instruction modifying the command to the actuator (20), the control device has means for:
- checking whether the two parts (16, 18) are in a critical range (I) of relative positioning,
- insofar as the two parts (16, 18) are in the critical range (I), applying to the actuator (20) a command that is different to the modified command, and
- bringing the bolt (26) into its engaged position or disengaged position when the two parts (16, 18) have left the critical range (I).

## Patentansprüche

1. Verfahren zur Steuerung eines Sitzes, der ausgerüstet ist mit:
- mindestens einem steuerbaren Stellglied (20) für die Verschiebung von zwei Teilen (16, 18) eines Sitzes zueinander;
- eine steuerbare Verriegelung (26) zur mechanischen positiven Blockierung der Bewegung der zwei Teile des Sitzes, wobei die Verriegelung (26) zwischen einer Eingreifposition in Gegenüberstellung zu einem komplementären Anschlag (30) und einer freigesetzten Position mit Abstand zu dem Anschlag (30) bewegbar ist,
**dadurch gekennzeichnet, dass** es im Falle eines Befehls der Modifikation der Steuerung des Stellgliedes (20) die Schritte umfasst:
- Überprüfen, ob die zwei Teile (16, 18) in einem kritischen Bereich (I) der relativen Positionierung sind,
- sobald die zwei Teile (16, 18) in dem kritischen Bereich (I) sind, Zuführen eines Befehls an das Stellglied (20), der unterschiedlich zu dem modifizierten Befehl ist, und
- Überführen der Verriegelung (26) in ihre Eingreifposition oder ihre freigesetzte Position, wenn die zwei Teile (16, 18) aus dem kritischen Bereich (I) ausgetreten sind.

2. Verfahren zur Steuerung nach Anspruch 1, **dadurch gekennzeichnet, dass** der modifizierte Befehl eine Anweisung zur Unterbrechung der Bewegung des Stellglieds (20) ist und der unterschiedliche zugeführte Befehl die Fortsetzung der Bewegung ist.

3. Verfahren zur Steuerung nach Anspruch 1, **dadurch gekennzeichnet, dass** der modifizierte Befehl das Inbewegungsetzen des Stellgliedes (20) in eine Richtung ist, wobei die Verriegelung anfänglich verriegelt ist, und der unterschiedliche zugeführte Befehl die Verschiebung des Stellgliedes (20) in die umgekehrte Richtung ist.

4. Verfahren zur Steuerung nach einem beliebigen der vorhergehenden Ansprüche, **dadurch gekennzeichnet, dass** der kritische Bereich (I) sich mit einem Ende des Anschlags (30) überlappt.

5. Sitz umfassend:
- mindestens zwei zueinander bewegliche Teile (16, 18),
- mindestens ein steuerbares Stellglied (20) zur Verschiebung der zwei Teile (16, 18) des Sitzes zueinander;
- eine steuerbare Verriegelung (26) zur positiven mechanischen Blockierung der Bewegung der zwei Teile des Sitzes, wobei die Verriegelung (26) zwischen einer Eingreifposition in Gegenüberstellung zu einem komplementären Anschlag (30) und einer freigesetzten Position mit Abstand zu dem Anschlag (30) bewegbar ist,
- eine Steuervorrichtung (22, 24),
**dadurch gekennzeichnet, dass** im Falle des Befehls der Modifikation der Steuerung des Stellglieds (20) die Steuervorrichtung Mittel umfasst, um:
- zu überprüfen, ob die zwei Teile (16, 18) in einem kritischen Bereich (I) der relativen Positionierung sind,
- sobald die zwei Teile (16, 18) in dem kritischen Bereich (I) sind, dem Stellglied (20) einen Befehl zuzuführen, der unterschiedlich zu dem modifizierten Befehl ist und
- die Verriegelung (26) in ihre Eingreifposition oder ihre freigesetzte Position zu überführen, wenn die zwei Teile (16, 18) aus dem kritischen Bereich (I) herausgetreten sind.
